# EUROPÄISCHE PATENTSCHRIFT

(11) **EP 1 213 194 B1**
(45) Veröffentlichungstag und Bekanntmachung des Hinweises auf die Patenterteilung: **09.03.2005**
(21) Anmeldenummer: 01129040.0
(22) Anmeldetag: 07.12.2001
(51) Int. Cl.: B60R 21/20

(54) **Hülle für Seitenairbags**
Envelope for side airbags
Enveloppe pour coussins gonflables latéraux

(30) Priorität: 09.12.2000 DE 10061367
(43) Veröffentlichungstag der Anmeldung: 12.06.2002
(73) Patentinhaber: Johns Manville Europe GmbH, 61352 Bad Homburg v.d.H. (DE)
(72) Erfinder: Plötz, Kurt, 65529 Waldems (DE)
(74) Vertreter: Luderschmidt, Schüler & Partner GbR

(56) Entgegenhaltungen:
- WO-A-01/64478
- DE-A- 19 856 623

## Beschreibung

Die Erfindung betrifft eine Hülle für einen Seitenairbag sowie einen mit einer Hülle versehenen Seitenairbag.

Airbags sind eine Sicherheitseinrichtung in Kraftwagen, die heutzutage nicht mehr wegzudenken ist. Zunächst wurden Airbags in gefaltetem Zustand beispielsweise in einer entsprechenden Ausnehmung im Lenkrad eines Fahrzeugs angebracht, um den Fahrer des Fahrzeugs bei einem Unfall zu schützen. Für den Beifahrer wurden entsprechende Airbags in einer Ausnehmung im Armaturenbrett angeordnet.

Es zeigte sich, dass es bei dieser Anbringung von Airbags zu unkontrollierten Faltungen kam, die man dadurch zu beheben versuchte, indem man den Airbag im gefalteten Zustand mit einer Hülle einfasste. Diese bestand vorzugsweise aus einer Schrumpffolie, wie in dem deutschen Gebrauchsmuster G 91 010 99.3 beschrieben wird.

Weitere Entwicklungen des Airbags werden beispielsweise in der DE 195 366 03 Al beschrieben, wo der Airbag, hier mit Luftsack bezeichnet, eine Halteeinrichtung aufweist, welche die Entfaltung des Luftsacks im zeitlichen Verlauf in Fahrzeugquerrichtung (Q) begünstigt und in Fahrzeuglängsrichtung (L) verzögert. Die Halteeinrichtung besteht vorzugsweise aus einer Kunststofffolie, kann jedoch auch aus einem Polyethylenfaservlies bestehen.

Eine weitere Hülle ist aus der DE 19 856 623 A bekannt. Sie besteht aus einem Vliesstoff aus Polyamid, Polypropylen oder Polyester.

Es hat sich gezeigt, dass es aufgrund immer stärker in den Vordergrund tretender Sicherheitsanforderungen neben den vorstehend beschriebenen sogenannten Frontairbags zunehmend auch der Einbau sogenannter Seitenairbags erwünscht war. Diese Seitenairbags, welche zusätzlich neben den Frontairbags eingebaut werden, haben die Aufgabe bei einem Kollisionsfall insbesondere den Kopfbereich der Insassen zu schützen. Aufgrund der speziellen räumlichen Gegebenheiten in einem Kraftfahrzeug werden an den Einbau und das Funktionieren derartiger Seitenairbags hohe Anforderungen gestellt.

Üblicherweise werden diese Seitenairbags extrem kompakt zusammengefaltet in einer Führungsröhre im Dachbereich des Fahrzeugs untergebracht. Die Führungsröhre besitzt eine schlitzförmige Öffnung in Entfaltungsrichtung des Airbags. Bei der Entfaltung durchstößt der Airbag diese Öffnung und tritt in den Passagierraum ein und hilft somit insbesondere den Kopf und den Hals der im Kraftfahrzeug sitzenden Personen zu schützen.

Auch der Seitenairbag ist mit einer Hülle umgeben, die zusammen mit dem Airbag in einem Führungsrohr sitzt; die Hülle soll auch Schutz vor Beschädigungen bieten und zwar sowohl beim Einbau als auch bei der Entfaltung des Airbags. Sie dient ferner zur Befestigung des Airbags in der Röhre.

Beim Entfalten des Airbags muß diese Hülle an einer bestimmten Stelle aufreißen um das Heraustreten des Airbags zu ermöglichen. Diese sogenannte Sollbruchstelle ist zumeist als Nahtstelle oder Schweißnaht ausgebildet.

Die extrem hohe Dynamik des Entfaltungsvorganges erfordert insbesondere bei Seitenairbags spezielle Eigenschaften des Hüllmaterials. Neben einem guten Brandverhalten (Reibungshitze) ist insbesondere die Weiterreißfestigkeit von Wichtigkeit, da ein undefiniertes Aufreißen der Hülle zu einer Fehlfunktion des Airbags führt. Außerdem spielen Volumen, die Hüllendicke und insbesondere die Oberflächenbeschaffenheit eine wichtige Rolle.

Es ist bekannt, als Hülle für Seitenairbags Polyamidvliesstoffe zu verwenden, wobei diese Vliesstoffe thermisch verfestigt sind. Derartige Materialien leiden jedoch an den Folgen einer hohen Wasseraufnahme, einer unzureichenden Formstabilität und einem unbefriedigenden Brandverhalten.

Obwohl bereits eine Reihe von Umhüllungen für Airbags bekannt sind, besteht noch ein Bedürfnis nach verbesserten Hüllen für Seitenairbags. Aufgabe der Erfindung ist es deshalb, eine Hülle für einen Seitenairbag zur Verfügung zu stellen, die eine hohe Weiterreißfestigkeit aufweist, ein gutes Brandverhalten aufzeigt, ein geringes Volumen benötigt, eine hohe Formstabilität und Dimensionsstabilität besitzt und insbesondere eine glatte, verdichtete Oberfläche besitzt.

Diese Aufgabe wird gelöst durch eine aus einem Vlies ausgeführte Hülle für einen Seitenairbag, bei der die Hülle aus einem verfestigten Polyesterspinnvlies besteht, das keinen chemischen Binder enthält, und eine Sollbruchstelle zum Aufreißen der Hülle im Kollisionsfall aufweist.

Das Polyesterspinnvlies ist mit Wasserstrahlvernadelung oder vorzugsweise mit mechanischer Vernadelung verfestigt. Es ist vorteilhaft, wenn das Polyesterspinnvlies mechanisch oder thermisch vorverfestigt ist. Die Sollbruchstelle ist zweckmäßigerweise als Nahtstelle ausgeführt. Es ist vorteilhaft, wenn die Sollbruchstelle als Schweißnaht ausgeführt ist. In einer besonders vorteilhaften Ausführungsform weist das Polyesterspinnvlies eine geglättete Oberfläche auf.

Vorzugsweise ist das Polyesterspinnvlies bei 140 bis 220°C ausgeschrumpft. Als Polyesterspinnvlies ist besonders ein aus Polyethylenterephthalat bestehendes Spinnvlies geeignet. Die Dicke der Polyesterspinnvliese liegt bevorzugt in einem Bereich von 0,4 bis 2 mm insbesondere von 0,8 bis 1,2 mm.

Das Polyesterspinnvlies weist zweckmäßigerweise ein Flächengewicht von 60 bis 250 g/m², insbesondere 100 bis 120 g/m² auf.

Ein weiterer Gegenstand der Erfindung ist ein Seitenairbag, der im gefalteten Zustand mit einer Hülle, wie sie vorstehend beschrieben wird, umhüllt ist.

Das Polyesterspinnvlies kann nach an sich bekannten Verfahren hergestellt werden, bevorzugt ist jedoch das sogenannte Spunbondverfahren, wie es z. B. in der DE-OS 2 460 755 beschrieben wird, dabei entsteht ein Vlies aus Endlosfilamenten.

Als Polyestermaterial wird bevorzugt Polyethylenterephthalat oder Polybutylenterephthalat verwendet. Es ist auch möglich Copolyester zu verwenden.

Die Titer der Filamente liegen im allgemeinen im Bereich von 1 bis 6 dtex, vorzugsweise bei 1,8 bis 2,2 dtex bei Filamentvliesen (und 1,8 bis 4 dtex bei Stapelfaservliesen).

Bei dem bevorzugten Spunbondverfahren werden die einzelnen Filamentlagen auf ein sich bewegendes Band abgelegt. Anschließend kann eine Vorverfestigung des Rohvlieses erfolgen, um dessen Weiterbehandlung zu erleichtern. Die Vorverfestigung kann durch mechanisches Vernadeln oder auch durch thermische Verfahren z. B. mittels eines Kalanders erfolgen. Die mechanische Vorverfestigung erfolgt im allgemeinen mit einer Vernadelungsdichte von 10 bis 40 Stichen/cm². Die thermische Vorverfestigung erfolgt bei 180 bis 220°C.

Anschließend erfolgt die eigentliche Verfestigung des Vlieses. Diese Verfestigung erfolgt vorzugsweise mit Hilfe einer Wasserstrahlvernadelung. Bei der Wasserstrahlvernadelung erfolgt die Verfestigung mittels Hochdruckwasserstrahlen. Diese Methode wird bevorzugt eingesetzt, da gleichzeitig mit der Verfestigung auch eine hohe Verdichtung des Materials erfolgt. Die Vernadelung erfolgt bevorzugt bei einem Wasserdruck von 100 bis 400 bar.

Neben der Verfestigung mittels Wasserstrahlvemadelung ist besonders bevorzugt auch eine mechanische Verfestigung mittels mechanischem Vernadeln, wobei zur Erreichung einer geeigneten Verdichtung eine sehr hohe Nadelungsdichte mit einer vorteilhaft noch angeschlossenen Kalandrierung zweckmäßig ist. Die Vernadelung erfolgt im allgemeinen mit einer Vernadelungsdichte von 40 bis 200 Stichen/cm².

Bevorzugt wird das Polyesterspinnvlies ausgeschrumpft. Dieses Ausschrumpfen kann vor, während oder nach der Verfestigung mittels Wärme geschehen. Dabei ist es möglich den Vliesstoff beispielsweise durch einen Ofen, oder eine IR-Strecke hindurchzuführen; das Ausschrumpfen kann jedoch auch mittels eines beheizten Kalanders erfolgen.

Ausschrumpfen im Rahmen der Erfindung bedeutet, dass der Vliesstoff bei einer späteren Wärmebehandlung nicht oder nur noch unwesentlich schrumpft. Je nach Polyestermaterial erfolgt das Ausschrumpfen zweckmäßigerweise bei Temperaturen von ca. 140 bis 220° C.

Nach der Verfestigung kann der Vliesstoff zur Glättung der Vliesoberfläche über eine rotierende, beheizte und glatte Walze geführt werden. Dabei wird durch Anschmelzen der Filamente an der Vliesoberfläche eine Glättung des Vlieses erreicht. Die Temperatur der Walze liegt zwischen 200° C und 250° C.

In einer besonders bevorzugten Ausführungsform erfolgt die Glättung durch einen nicht-bewegten, beheizten Balken, über den das Vlies geführt wird. Durch Anschmelzen der Filamente an der Vliesoberfläche und gleichzeitigem Verstreichen der geschmolzenen Filamentanteile durch den feststehenden Glättungsbalken lassen sich besonders effektiv geglättete Vliesoberflächen erzielen. Typische Temperaturen des bevorzugten elektrisch beheizten Glättungsbalken liegen zwischen 210° C und 300° C.

Die vorstehend beschriebene Glättung erfolgt bevorzugt einseitig. Selbstverständlich kann auch beidseitig geglättet werden, wobei dann ein zweistufiger Prozeß bevorzugt wird.

Nach der Verfestigung des Vliesstoffes und der eventuell durchgeführten Glättung kann noch eine Kalandrierung angeschlossen werden. Diese erfolgt vorzugsweise mit einem einseitig beheizten Kalander bei einer Temperatur von 180 bis 220° C, bevorzugt bei 210 bis 220° C. Neben den üblichen Trommelkalandern sind auch Tuchkalander vorteilhaft.

Eine Verfestigung der Vliese mit einem chemischen Binder erfolgt nicht, das heißt, dass im Rahmen der Erfindung weder eine Vorverfestigung mittels chemischer Binder noch eine Endverfestigung des Vlieses stattfindet.

Das Umhüllen des Seitenairbags mit der als Vlies ausgeführten Hülle kann an sich nach bekannten Methoden geschehen.

Der umhüllte Seitenairbag kann z. B. in ein Führungsrohr eingebaut werden, das vorteilhaft im Dachbereich des Fahrzeuges angebracht ist. Selbstverständlich kann der umhüllte Seitenairbag auch auf andere Art und Weise eingebaut und im Fahrzeug eingebaut und angebracht werden.

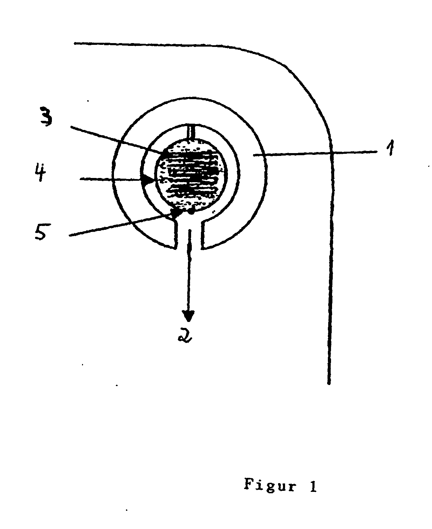

In Figur 1 wird beispielhaft ein mit einer Hülle versehener Seitenairbag gemäß der Erfindung schematisch dargestellt. Dabei ist (1) das Führungsrohr, das nach unten in den Fahrzeugraum gerichtet eine Öffnung (2) aufweist, durch die der Airbag im Kollisionsfall austreten kann. Der Airbag (3) liegt in gefalteter Form vor und wird durch die Airbaghülle (4) umgeben. In Richtung zur Austrittsstelle weist die Airbaghülle eine Sollbruchstelle (5) auf, die hier als Nahtstelle ausgeführt ist.

Die Sollbruchstellen können beispielsweise durch eine Nahtstelle gebildet werden, die bei einem Zusammennähen des Vlieses entsteht. Dabei ist es wichtig, dass die Nahtstelle eine ausreichend niedrigere Festigkeit als das Hüllmaterial selbst aufweist, damit im Kollisionsfall an der Sollbruchstelle die Hülle problemlos aufreißt.

Die Sollbruchstelle kann auch durch Verschweißen z. B. mittels Hochfrequenzverschweißen (HF) oder Ultraschall (US) erfolgen. Auch hier ist es erforderlich, dass die Schweißnaht eine hinreichend geringere Festigkeit als das Hüllmaterial selbst aufweist.

Es war besonders überraschend, dass es gemäß der Erfindung möglich ist, eine aus einem als Vlies ausgeführten Hülle für Seitenairbags zur Verfügung zu stellen. Die Hülle gemäß der Erfindung zeigt ein sehr gutes Brandverhalten auf und zeigt insbesondere kein "fogging". Das Aufreißen der Hülle im Kollisionsfall geht problemlos vonstatten. Da das Vlies eine hohe Festigkeit und eine sehr gute Weiterreißfestigkeit besitzt, kann der Airbag schnell und ohne im wesentlichen gebremst zu werden durch die Sollbruchstelle hindurchtreten; es finden beim Entfalten nur minimal Reibungsverluste statt. Der Einbau des Seitenairbags gemäß der Erfindung ist sehr einfach und kann problemlos automatisiert werden.

Die Erfindung wird durch folgende Beispiele näher erläutert:

### Beispiel 1

Ein Spunbondvlies mit 120g/m² und 2 dtex Filamenttiter wird nach dem herkömmlichen Spunbondverfahren hergestellt. Anschließend erfolgt eine mechanische Vorverfestigung durch mechanisches Vernadeln mit 20 St/cm². Die endgültige Verfestigung wird mittels Wasserstrahlvernadelung bei einem Druck von 250 bar durchgeführt. Anschließend wird bei 180°C getrocknet und anschließend thermofixiert.

### Beispiel 2

Ein Spunbondvlies mit 120g/m² und 2 dtex Filamenttiter wird nach dem herkömmlichen Spunbondverfahren hergestellt. Anschließend erfolgt eine Vorverfestigung durch mechanisches Vernadeln mit 20 St/cm². Die endgültige Verfestigung wird durch mechanisches Vernadeln mit einer Stichzahl von 60 Stichen/cm² erreicht. Anschließend wird mit Hilfe eines elektrisch beheizten Balkens, über den das Vlies geführt wird und der auf einer Temperatur von 270° C gehalten wird, die Vliesoberfläche einseitig geglättet. Die anschließende Kalandrierung des Vlieses bei 210° C führt zum Ausschrumpfen des Vlieses und beendet den Herstellungsprozeß des Vliesstoffes.

Das so erhaltene Vlies wird auf eine für den gefalteten Airbag erforderliche Größe geschnitten, entsprechend weiter verarbeitet und verschweißt.

## Patentansprüche

1. Eine aus einem als Vlies ausgeführte Hülle für Seitenairbags, bei der die Hülle aus einem verfestigten Polyesterspinnvlies besteht, das keinen chemischen Binder enthält und eine Sollbruchstelle zum Aufreißen der Hülle im Kollisionsfall aufweist.

2. Hülle nach Anspruch 1, **dadurch gekennzeichnet, daß** das Polyesterspinnvlies mittels mechanischer Vernadelung mit einer Vernadelungsdichte von 40 - 200 Stichen/cm² verfestigt ist.

3. Hülle nach Anspruch 1, **dadurch gekennzeichnet, daß** das Polyesterspinnvlies
mittels Wasserstrahlvernadelung verfestigt ist.

4. Hülle nach mindestens einem der Ansprüche 1 bis 3, **dadurch gekennzeichnet, daß** das Polyesterspinnvlies mechanisch oder thermisch vorverfestigt ist.

5. Hülle nach mindestens einem der Ansprüche 1 bis 4, **dadurch gekennzeichnet, daß** die Sollbruchstelle als Nahtstelle ausgeführt ist.

6. Hülle nach Anspruch 5, **dadurch gekennzeichnet, daß** die Sollbruchstelle als Schweißnaht ausgeführt ist.

7. Hülle nach mindestens einem der Ansprüche 1 bis 6, **dadurch gekennzeichnet, daß** das Polyesterspinnvlies bei 140° bis 220° C ausgeschrumpft ist.

8. Hülle nach mindestens einem der Ansprüche 1 bis 7, **dadurch gekennzeichnet, daß** das Polyesterspinnvlies ein Polyethylenterephthalatspinnvlies ist.

9. Hülle nach mindestens einem der Ansprüche 1 bis 8, **dadurch gekennzeichnet, daß** das Polyesterspinnvlies eine Dicke von 0,4 bis 2 mm aufweist.

10. Hülle nach Anspruch 9, **dadurch gekennzeichnet, daß** das Polyesterspinnvlies eine Dicke von 0,8 bis 1,2 mm aufweist.

11. Hülle nach mindestens einem der Ansprüche 1 bis 10, **dadurch gekennzeichnet, daß** das Polyesterspinnvlies ein Flächengewicht von 60 bis 250 g/m² aufweist.

12. Hülle nach Anspruch 11, **dadurch gekennzeichnet, daß** das Polyesterspinnvlies ein Flächengewicht von 100 bis 120 g/m² aufweist.

13. Hülle nach mindestens einem der Ansprüche 1 - 12, **dadurch gekennzeichnet, daß** das Polyestervlies eine geglättete Oberfläche aufweist.

14. Seitenairbag, der im gefalteten Zustand mit einer Hülle nach mindestens einem der Ansprüche 1 - 13 umhüllt ist.

## Claims

1. A wrapping for side-impact airbags accomplished on spunbonded fabrics, wherein the wrapping is consisting of a strengthened polyester spunbonded fabric which does not comprise any chemical binder and comprises a predetermined breaking point for the snatch operation of the wrapping in case of collision.

2. A wrapping according to claim 1, **characterized in that** the polyester spunbonded fabric is strengthened by mechanical needle punching with a needle punching density of 40 to 200 stitches / cm².

3. A wrapping according to claim 1, **characterized in that** the polyester spunbonded fabric is strengthened by aqua jet needle punching.

4. A wrapping according to at least one of claims 1 to 3, **characterized in that** the polyester spunbonded fabric is mechanically or thermally prestrengthened.

5. A wrapping according to at least one of claims 1 to 4, **characterized in that** the predetermined breaking point is accomplished as line joint.

6. A wrapping according to claim 5, **characterized in that** the predetermined breaking point is accomplished as welding seam.

7. A wrapping according to at least one of claims 1 to 6, **characterized in that** the polyester spunbonded fabric is shrunken at temperatures between 140 to 220 °C.

8. A wrapping according to at least one of claims 1 to 7, **characterized in that** the polyester spunbonded fabric is a polyethylenterephthalate spunbonded fabric.

9. A wrapping according to at least one of claims 1 to 8, **characterized in that** the polyester spunbonded fabric comprises a thickness of between 0.4 to 2 mm.

10. A wrapping according to claim 9, **characterized in that** the polyester spunbonded fabric comprises a thickness of between 0.8 to 1.2 mm.

11. A wrapping according to at least one of claims 1 to 10, **characterized in that** the polyester spunbonded fabric comprises a mass per unit area of between 60 to 250 g/m².

12. A wrapping according to claim 11, **characterized in that** the polyester spunbonded fabric comprises a mass per unit area of between 100 to 120 g/m².

13. A wrapping according to at least one of claims 1 to 12, **characterized in that** the polyester spunbonded fabric comprises a smoothed surface.

14. A side impact airbag that, in folded state, is enwrapped by a wrapping according to at least one of the claims 1 to 13.

## Revendications

1. Enveloppe réalisée en forme de non-tissé pour des coussins de sécurité gonflables latéraux, l'enveloppe étant constituée d'un non-tissé encollé en polyester, qui ne contient pas de liant chimique et qui présente un point destiné à la rupture pour la déchirure de l'enveloppe en cas de collision.

2. Enveloppe selon la revendication 1, **caractérisée en ce que** le non-tissé en polyester est encollé au moyen d'un aiguilletage mécanique avec une densité d'aiguilletage de 40 à 200 points/cm².

3. Enveloppe selon la revendication 1, **caractérisée en ce que** le non-tissé en polyester est encollé au moyen d'un aiguilletage par jet d'eau.

4. Enveloppe selon au moins une des revendications 1 à 3, **caractérisée en ce que** le non-tissé en polyester est soumis à un préencollage par voie mécanique ou par voie thermique.

5. Enveloppe selon au moins une des revendications 1 à 4, **caractérisée en ce que** le point destiné à la rupture est réalisé sous la forme d'un point de soudure.

6. Enveloppe selon la revendication 5, **caractérisée en ce que** le point destiné à la rupture est réalisé sous la forme d'un cordon de soudure.

7. Enveloppe selon au moins une des revendications 1 à 6, **caractérisée en ce que** le non-tissé en polyester est soumis à un retrait complet à une température de 140 à 220 °C.

8. Enveloppe selon au moins une des revendications 1 à 7, **caractérisée en ce que** le non-tissé en polyester est un non-tissé en polyéthylènetéréphtalate.

9. Enveloppe selon au moins une des revendications 1 à 8, **caractérisée en ce que** le non-tissé en polyester présente une épaisseur de 0,4 à 2 mm.

10. Enveloppe selon la revendication 9, **caractérisée en ce que** le non-tissé en polyester présente une épaisseur de 0,8 à 1,2 mm.

11. Enveloppe selon au moins une des revendications 1 à 10, **caractérisée en ce que** le non-tissé en polyester présente un poids surfacique de 60 à 250 g/cm².

12. Enveloppe selon la revendication 11, **caractérisée en ce que** le non-tissé en polyester présente un poids surfacique de 100 à 120 g/cm².

13. Enveloppe selon au moins une des revendications 1 à 12, **caractérisée en ce que** le non-tissé en polyester présente une surface lisse.

14. Coussin de sécurité gonflable latéral qui, à l'état déployé, est recouvert d'une enveloppe selon au moins une des revendications 1 à 13.
